# EUROPÄISCHE PATENTANMELDUNG

(11) **EP 1 239 151 A1**
(43) Veröffentlichungstag der Anmeldung: **11.09.2002**
(21) Anmeldenummer: 01810225.1
(22) Anmeldetag: 05.03.2001
(51) Int. Cl.: F03G 7/06, B32B 15/08

(54) **Aktuator**

(71) Anmelder: ABB RESEARCH LTD., 8050 Zürich (CH)
(72) Erfinder: Mahieux, Cèline, 5400 Baden (CH); Bunce, Christopher, Lymington Hants SO41 8HZ (GB)
(74) Vertreter: ABB Patent Attorneys

(57) **Zusammenfassung**

Ein Aktuatorelement (8) umfasst einen flächigen Körper (10) aus einem Laminat aus faserverstärktem Kunststoff und ist mit Hilfe einer thermosensiblen Gedächtnislegierung von einer ersten Position in eine zweite Position verstellbar. Die erste Position ist dabei im Wesentlichen durch einen ersten bei Gebrauchstemperatur stabilen Zustand des Laminats mit einer ersten Krümmung und die zweite Position im Wesentlichen durch einen zweiten, bei Gebrauchstemperatur stabilen Zustand des Laminats mit einer zweiten Krümmung gegeben. Die thermosensible Gedächtnislegierung ist vorzugsweise auf jeder flächigen Seite (3, 4) des flächigen Körpers (10) in Form eines Drahtes (14, 16) angeordnet. Eine Aktuatorvorrichtung mit dieser art Aktuatorelement (8) kann in verschiedenen Ausgestaltungsformen vielfältig eingesetzt werden.

## Beschreibung

### TECHNISCHES GEBIET

Die Erfindung bezieht sich auf ein Aktuatorelement gemäss den Merkmalen des Oberbegriffs des Patentanspruches 1 und eine Aktuatorvorrichtung gemäss den Merkmalen des Oberbegriffs des Anspruches 11.

### STAND DER TECHNIK

Aktuatorvorrichtungen werden in Regelkreisen zur Aktivierung eines Regelmechanismus, wie beispielsweise eines Ventils oder eines elektrischen Kontaktes eingesetzt. Ein Beispiel für eine Aktuatorvorrichtung zur Betätigung eines elektrischen Kontaktes ist z.B. in der US-5977858 offenbart. Die gezeigte Aktuatorvorrichtung weist als Aktuatorelement eine unter Vorspannung in einem Gehäuse eingespannte Blattfeder aus Federstahl auf. Auf den beiden einander gegenüberliegenden Seiten der durch die Vorspannung gebogenen Blattfeder sind Drähte aus einer thermosensiblen Gedächtnislegierung durch Löcher im Gehäuse geführt und dort fixiert. Die Drähte sind in Schlaufen um die Blattfeder geführt. In der Mitte der Blattfeder ist auf der einen Seite senkrecht zur Oberfläche der Blattfeder ein Stempel aus einem elektrisch nicht leitenden Material fixiert, der durch eine Stempelöffnung des Gehäuses hindurchgeführt ist und an seiner Spitze mit einem Kontaktelement verbunden ist. In einer ersten Position ist die Blattfeder gegen die Stempelöffnung hin gewölbt und der Stempel drückt das Kontaktelement gegen einen Kontaktpunkt eines Stromkreises, so dass der Stromkreis geschlossen ist und Strom fliesst. In einer zweiten Position ist die Blattfeder in entgegengesetzter Richtung gewölbt das Kontaktelement hat keinen Kontakt mehr mit dem Kontaktpunkt, der Stromkreis ist unterbrochen. Um die Blattfeder von der ersten Position in die zweite Position zu bringen, wird der Draht aus der Gedächtnislegierung, der auf der der Stempelöffnung gegenüberliegenden Seite durch das Gehäuse geführt ist, erwärmt, wodurch sich die Gedächtnislegierung zusammenzieht und die Blattfeder gegen ihren Federwiederstand aus der ersten Position in die zweite Position zieht. Der Stromkreis ist unterbrochen. Sobald die gewünschte Position der Blattfeder erreicht ist kann man den Draht wieder erkalten lassen, ohne dass sich die Position der Blattfeder ändert. Soll der Stromkreis geschlossen werden so erwärmt man den Draht auf der Seite der Stempelöffnung. Der Draht zieht sich zusammen und zieht die Blattfeder gegen ihren Federwiederstand in die erste Position zurück, der Stromkreis ist wieder geschlossen.

Die gezeigte Aktuatorvorrichtung ist relativ schwer. Nicht nur aufgrund des Eigengewichtes des metallischen Aktuatorelementes in Form der Blattfeder, sondern auch weil die Halterung der Blattfeder die Blattfeder unter Vorspannung halten muss, so dass diese gewölbt ist. Die Halterung muss daher entsprechend massiv gestaltet sein. Zudem erfordert das verstellen der Blattfeder gegen ihren Federwiderstand aus einer Position in die andere Position einen entsprechend grossen Energieaufwand.

### DARSTELLUNG DER ERFINDUNG

Aufgabe der Erfindung ist es daher, ein Aktuatorelement zur Verfügung zu stellen, das leicht ist, vielfältig einsetzbar und mit geringem Energieaufwand zu betätigen, sowie eine Aktuatorvorrichtung mit geringem Gewicht, effizient und in ihren verschiedenen Ausführungsformen vielfältig einsetzbar ist.

Diese Aufgabe löst ein Aktuatorelement mit den Merkmalen des Patentanspruches 1 sowie eine Aktuatorvorrichtung gemäss den Merkmalen des Anspruches 11.

Das erfindungsgemässe Aktuatorelement weist als Basiselement ein Laminat auf, das mit Hilfe einer thermosensiblen Gedächtnislegierung von einer ersten Position in eine zweite Position verstellbar ist. Das Laminat bildet einen flächigen Körper aus faserverstärktem Kunststoff, der bei Gebrauchstemperatur einen ersten stabilen Zustand mit einer ersten Krümmung und einen zweiten stabilen Zustand mit einer zweiten Krümmung aufweist. Die erste Position ist im wesentlichen durch die erste Krümmung des Laminats und die zweite Position im wesentlichen durch zweite Krümmung des Laminats bestimmt. Der Energieaufwand um das erfindungsgemässen Aktuatorelement 8 von einem Zustand in den anderen zu überführen ist äusserst gering. Durch den Einsatz des Laminats als Basiselement des Aktuatorelementes ist das Aktuatorelement sehr leicht. Ausserdem muss aufgrund der beiden stabilen, gekrümmten Zustände des flächigen Körpers aus Laminat das Aktuatorelement nicht durch die Halterung unter Vorspannung gehalten werden, was eine einfachere, weniger massive und dadurch leichtere Halterungskonstruktion erlaubt. Eine Aktuatorvorrichtung mit einem erfindungsgemässen Aktuatorelement ist dadurch insgesamt sehr leicht.

Da der als Aktuatorelement eingesetzte flächige Körper zwei stabile Krümmungen um zwei bestimmbare virtuelle Achsen aufweist, kann das Aktuatorelement vielfältig einsetzbar. Besonders Vorteilhaft ist es, wenn die zwei virtuellen Achsen etwa senkrecht aufeinander stehen. Dabei können die virtuelle Achsen auf der gleichen Seite des flächigen Körpers oder, für die meisten Anwendungen günstiger, auf den einander gegenüberliegenden Seiten des flächigen Körpers angeordnet sein.

Besonders einfach lässt sich ein erfindungsgemässes Aktuatorelement aus einem Laminat mit mindestens zwei Schichten unidirektional orientierter Fasern herstellen. Dabei kann über die Wahl der Abmessungen, der Verstärkungsfasern und der Polymermatrix der Krümmungsradius, die Lage der virtuellen Achsen sowie der Widerstand eingestellt werden, der überwunden werden muss, um das Aktuatorelement vom einen stabilen Zustand in den anderen stabilen Zustand zu verstellen. Besonders bewährt haben sich als Verstärkungsfasern Glassfasern, Kohlefasern, Aramidfasern und Gemische aus zwei oder auch aus allen drei Faserarten. Bevorzugt werden kontinuierliche Fasern eingesetzt mit einem Volumenanteil von zischen 40%-vol. und 70%-vol.. Als Polymermatrix haben sich Epoxidmatrix und thermoplastische Matrix, letztere vorzugsweise aus PEI oder PEEK bewährt. Die Kombination aus Fasern und Matrix wird vorteilhaft angepasst an die Einsatzanforderungen gewählt. Für den Einsatz bei höheren Temperaturen und unter Verschleissangriff ist beispielsweise eine Kombination aus Kohlefasern in einer Epoxidmatrix günstig. Ein weiterer Faktor der die Krümmung beeinflusst ist die Abfolge der Schichten mit den unidirektionalen Fasern. Besonders günstige Schichtungen sind: [0/90], [0₂/90₂], [-30/+30]

Besonders einfach und mit einem geringen Energieaufwand lässt sich der flächige Körper von einem stabilen Zustand in den anderen stabilen Zustand verstellen, wenn die Gedächtnislegierung auf beiden flächigen Seiten des flächigen Körpers angeordnet ist. In Form von Drähten aufgebracht ist die Gedächtnislegierung sehr wirkungsvoll. Mittels Cyanocryalat kann die Gedächtnislegierung auf dem flächigen Körper vorfixiert und dann dauerhaft mit Hilfe von Epoxydharz auf dem Laminat fixiert werden. Epoxydharz eignet sich wegen seiner hervorragenden Temperaturbeständigkeit und wegen seiner guten Verbindung mit der Polymermatrix des Laminats besonders zur Befestigung der Gedächtnislegierung auf dem Laminat.

Eine besonders einfache und kostengünstige Möglichkeit die Gedächtnislegierungen zu erwärmen und wieder abkühlen zu lassen, besteht darin die Gedächtnislegierung auf jeder flächigen Seite des flächigen Körpers als Teil eines Stromkreises auszugestalten, wobei in dem Stromkreis die Gedächtnislegierung jeder flächigen Seite des flächigen Körpers separat regelbar ist. Für die Änderung von einem stabilen Zustand in den anderen stabilen Zustand wird jeweils die Gedächtnislegierung auf einer flächigen Seite des flächigen Körpers unter Ausnutzung ihres elektrischen Widerstandes erwärmt.

Als Gedächtnislegierung eignet sich sehr gut eine NiTiCu-Legierung, beispielsweise mit 48.9% Ni, 45.1% Ti und 6% Cu.

Erfindungsgemäss wird eine Aktuatorvorrichtung mit erfindungsgemässen Aktuatorelementen ausgestattet. Dadurch ist sie zum einen sehr leicht und mit geringem Energieaufwand einsetzbar, zum anderen kann sie in ihren verschiedenen Ausführungsformen vielfältig eingesetzt werden.

Aufgrund seines geringen Gewichtes und der geringen Aktivierungsenergie ist die erfindungsgemässe Aktuatorvorrichtung sehr gut als Teil einer elektrischen Schaltung einsetzbar. Auch zur Strömungsumlenkung in einem Strömungskanal kann sie sehr gut eingesetzt werden. Dabei kann in der Aktuatorvorrichtung ein Aktuatorelement oder es können auch mehrere erfindungsgemässe Aktuatorelemente zur Umlenkung von Strömungen eingesetzte sein. Zwei Aktuatorelemente können im Zusammenwirken miteinander eine Aktuatorvorrichtung in der Form eines Greifers bilden.

Weitere bevorzugte Ausführungsformen sind Gegenstand weiterer abhängiger Patentansprüche.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: im Schnitt und ohne Berücksichtigung von Proportionen ein erfindungsgemässes Aktuatorelement;
- Fig. 2: in Draufsicht auf die erste flächige Seite ein Aktuatorelement in seinem ersten stabilen Zustand;
- Fig. 3: in Draufsicht auf die zweite flächige Seite das Aktuatorelement aus Fig.2 in seinem zweiten stabilen Zustand;
- Fig. 4 bis 6: in Ansicht der Stirnseiten jeweils den ersten und den zweiten stabilen Zustand von verschiedenen Ausführungsbeispielen erfindungsgemässer Aktuatorelemente;
- Fig. 7: perspektivisch zwei sich kreuzende Strömungskanäle in dessen Kreuzungsbereich eine Aktuatorvorrichtung zur Umleitung von Strömungen angeordnet ist, mit zwei der Aktuatorelementen in ihrem ersten stabilen Zustand.
- Fig. 8: die Darstellung aus Fig. 7 mit den Aktuatorelementen in ihrem zweiten stabilen Zustand.
- Fig. 9: eine Ansicht des Kreuzungsbereichs aus Fig. 7 vom aus Strömungsrichtung gesehen hinter dem Kreuzungsbereich liegenden Teil des Strömungskanals aus, angedeutet durch den Pfeil IX in Fig. 7;
- Fig. 10: eine Ansicht des Kreuzungsbereichs aus Fig. 8 von der durch den Pfeil X in Fig. 8 angezeigten Richtung aus.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

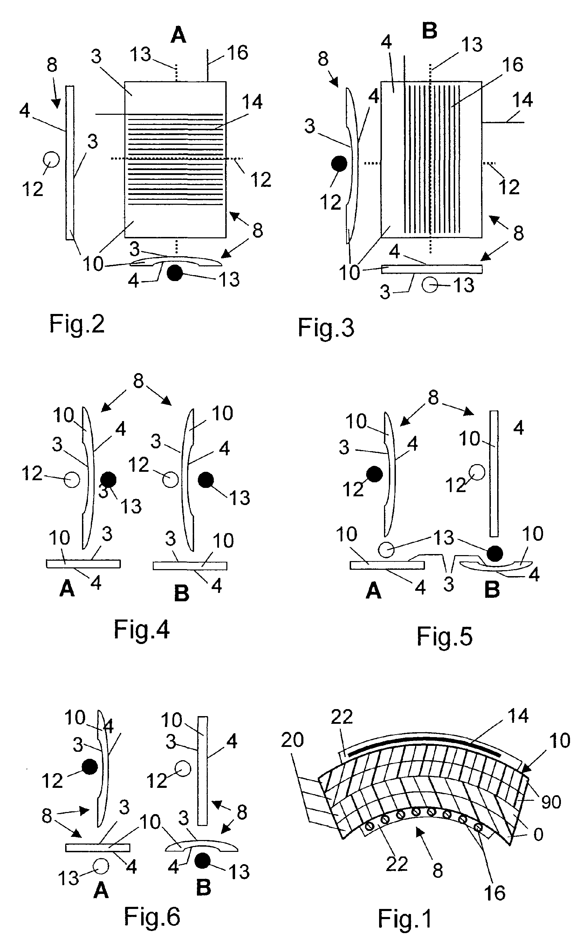

Figur 1 zeigt im Schnitt und ohne die korrekten Grössenverhältnisse zu berücksichtigen ein erfindungsgemässes Aktuatorelement 8, das als Basiselement einen flächigen Körper 10 aus einem faserverstärkten Laminat aus vier Laminatschichten 20 aufweist. Die Laminatschichten 20 weisen kontinuierliche, unidirektional ausgerichtete Kohlenstofffasern eingebettet in einer thermoplastischen Kunststoffmatrix aus PEEK auf. Der Kohlenstofffaseranteil beträgt etwa 60%-vol.. Die Schichtung des Laminats ist [0₂/90₂]. Auf jeder Seite des flächigen Körpers 10 ist je ein Draht 14, 16 aus einer thermosensiblen NiTiCu-Legierung aufgebracht. Die Legierung hat etwa eine Zusammensetzung von 48,9% Ni, 45,1% Ti und 6,0% Cu. Jeder der beiden Drähte 14, 16 ist in einer Schlangenlinie angeordnet, deren Einzellinien etwa parallel zueinander verlaufen und sich über die gesamte Länge bzw. Breite des Körpers erstrecken. Besonders gut ist dies auch in den Figuren 2 und 3 zu erkennen ist, in denen das erfindungsgemässen Aktuatorelement 8 in Draufsicht auf die erste bzw. zweite flächige Seite 3, 4 des flächigen Körpers 10 dargestellt ist. Die Ausrichtung der Einzellinien der durch den Draht 14, 16 gebildeten Schlangenlinie ist etwa um 90° verdreht auf den beiden flächigen Seiten des Körpers 10 und entsprechend der maximalen Krümmung ausgerichtet. Die Drähte 14, 16 haben etwa einen Durchmesser von 0,5 mm und sind mittels einer Kombination aus Cyanoacrylat und Epoxydharz 22 mit dem Laminat des flächigen Körpers 10 verbunden. Die beiden Drähte 14, 16 sind mit Ihren Enden jeweils über den Rand des flächigen Körpers 10 hinausgeführt (vgl. Fig.2 und 3) und können an einen Stromkreis (nicht dargestellt) angeschlossen werden.

Die gewählte Kombination der Schichtung und des Materials ergibt bei einer definierten Flächengrösse von hier etwa 10cm x 15cm zwei stabile, gekrümmte Zustände A, B des flächigen Körpers 10, wie sie in den Fig. 2 und 3 schematisch dargestellt sind. Fig.1 zeigt dabei den flächigen Körper 10 primär in Draufsicht auf die erste flächige Seite 3 und im ersten stabilen Zustand A, Fig.2 zeigt den flächigen Körper 10 primär in Draufsicht auf die zweite flächige Seite 4 und im zweiten stabilen Zustand B. Durch die jeweils in den Fig. 2 und 3 ebenfalls schematisch dargestellte Sicht auf die kurze bzw. die lange Stirnseite des flächigen Körpers, ist die jeweilige Krümmung im ersten bzw. zweiten stabilen Zustand A, B verdeutlicht, wobei die virtuelle Achse 12 bzw. 13 um die sich der flächige Körper 10 gerade krümmt, als ausgefüllter Kreis dargestellt ist, die virtuelle Achse 12, 13 um die sich der flächige Körper 10 gerade nicht krümmt, als leerer Kreis. In der gezeigten Ausführungsform befinden sich die virtuellen Achsen 12, 13, um die sich der Körper 10 in seinen beiden stabilen Zuständen A, B krümmt, auf den beiden einander gegenüberliegenden flächigen Seiten 3, 4 des flächigen Körpers 10. Sie schliessen einen Winkel von etwa 90° ein und sind in der Draufsicht jeweils durch gestrichelte Linien dargestellt.

Um nun beispielsweise das Aktuatorelement 8 aus seinem ersten stabilen Zustand A (Fig. 1) in seinen zweiten stabilen Zustand B (Fig. 2) zu überführen, ist der Draht 14 auf der ersten flächigen Seite 3 des flächigen Körpers 10 (Fig. 1) kalt und nicht an den Stromkreis angeschlossen. Der Draht 16 auf der zweiten flächigen Seite 4 des flächigen Körpers (Fig.2) wird an den Stromkreis angeschlossen, erwärmt sich aufgrund seines elektrischen Widerstandes und zieht sich zusammen. Durch die Kraft die der Draht 16 beim Sich-Zusammenziehen auf das Laminat des flächigen Körpers 10 ausübt, wird der flächige Körper 10 aus seinem ersten stabilen Zustand A (Fig. 1) in den zweiten stabilen Zustand B (Fig. 2) überführt. Der Draht 16 wird nun wieder aus dem Stromkreis entkoppelt, erkaltet und dehnt sich auf seine ursprüngliche Länge aus. Das Aktuatorelement 8 verbleibt in seinem zweiten stabilen Zustand, bis der Draht 14 auf der ersten flächigen Seite 3 des flächigen Körpers 10 an den Stromkreis angeschlossen wird, sich erwärmt und zusammenzieht. Das Aktuatorelement 8 wird in den ersten stabilen Zustand zurückgeführt. Der Draht 14 kann aus dem Stromkreis entkoppelt werden und das Aktuatorelement 8 bleibt in seinem ersten stabilen Zustand A. Ein zyklischer Wechsel zwischen den beiden stabilen Zuständen A, B kann mit einer Frequenz von etwa 0.25 Hz realisiert werden.

Statt der angegebenen Kohlenstofffasern in einer PEEK-Matrix, sind auch Laminatschichten aus Glasfasern in einer PEI-Matrix, Glassfasern und/ oder Kohlenstofffasern in einer Epoxydmatrix, Aramidfasern in einer PEEK-Matrix, und alle Kombinationen, bei denen bei einer geringen Anzahl Schichten bei Gebrauchstemperatur zwei stabile Krümmungszustände des entstehenden flächigen Körpers resultieren. Auch die Schichtung kann statt [0₂/90₂] beispielsweise [0/90], [-30/+30] oder jede andere Schichtfolge sein, die mit dem gewählten Material ein im genannten mechanischen Sinne bi-stabiles Laminat ergibt. Angepasst an den resultierenden flächigen Körper kann der Draht 14, 16 auch einen anderen Durchmesser aufweisen als 0.5cm. Wenn grössere Kräfte aufzuwenden sind, um den Körper 10 von dem einen stabilen Zustand in den anderen stabilen Zustand zu bringen, kann z.B. ein grösserer Durchmesser vorteilhaft sein, anderenfalls auch ein kleinerer Durchmesser. Auch eine andere als die beschriebene Fixierung des Drahtes 14 auf dem Oberfläche des flächigen Körpers 10 mit Cyanocarylat und Epoxydharz ist denkbar, z.B. bei einer thermoplastischen Matrix durch Verschweissen mit der Matrix unter Verwendung eines entsprechenden Thermoplasten als Schweissdraht. Der Draht kann auch eine andere Zusammensetzung als die genannte Legierung haben solange es sich dabei um eine temperatursensible Gedächtnislegierung handelt. Es versteht sich von selbst dass bei Legierungen die sich unter Wärmeeinfluss ausdehnen, die Steuerung entsprechend umgekehrt werden muss. Der Draht 14, 16 kann statt über die gesamte Länge bzw. Breite der flächigen Seite 3, 4 des Körpers 10 auch nur auf einem Teil der flächigen Seite 3, 4 in Schlangenlinien oder in anderer geeigneter Form angebracht sein, wenn beispielsweise der flächige Körper sehr gross, der Krümmungsradius im Verhältnis dazu aber eher gering ist, oder wenn die Krümmungsachse 12, 13 nicht zentrisch angeordnet ist. Ein zyklischer Wechsel zwischen den beiden stabilen Zuständen A, B kann abhängig von der für den Wechsel aufzuwendenden Energie, dem Material und der Zeitdauer, während der ein zyklischer Wechsel durchgeführt werden soll, mit einer Frequenz bis zu 20 Hz realisiert werden.

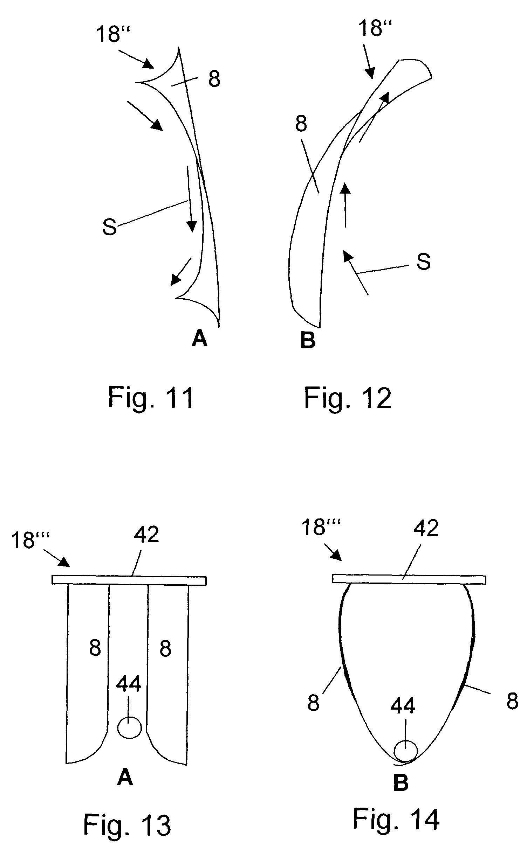

In den Fig. 4 bis 6 sind verschiedene Ausführungsformen erfindungsgemässer Aktuatorelemente 8 jeweils in ihrem ersten stabilen Zustand A und ihrem zweiten stabilen Zustand B jeweils in Sicht auf die kurze und die lange Stirnseite dargestellt. Analog zu der Darstellung in den Fig. 2 und 3 sind die virtuellen Achsen 12, 13 wieder schematisch durch einen leeren bzw. gefüllten Kreis angedeutet. Wie aus den Figuren ersichtlich können je nach Wahl des Materials: Art der Faser/des Fasergemisches, Volumenanteil, Art der Matrix; der Schichtung und der Abmessungen für das Aktuatorelement 8, Aktuatorelemente 8 mit unterschiedlichen stabilen Zuständen A, B erreicht werden. Es sind bi-stabile Laminate mit nahezu beliebigen Abmessungen möglich, wobei jeweils das Material entsprechend gewählt werden muss. Vorstellbar sind Abmessungen beispielsweise von einigen Millimetern bis in den Meterbereich. Über die genannten Faktoren können die Krümmungsradien und auch die virtuellen Achsen beeinflusst werden. So können die virtuellen Achsen 12, 13 parallel ausgerichtet sein, aber auf den zwei einander gegenüberliegenden Seiten des flächigen Körpers 10 liegen (Fig.4). Sie können auf der gleichen Seite des flächigen Körpers 10 liegen aber etwa 90° zueinander verdreht sein (Fig. 5) und sie können, wie dies auch für die Fig. 1 und 2 bereist beschrieben war, auf den einander gegenüberliegenden Seiten des flächigen Körpers 10 angeordnet sein und um etwa 90° zueinander verdreht sein (Fig. 6). Zusätzlich können sie eine schraubenförmige Verdrehung aufweisen, wie dies beispielsweise in den Fig. 11 und 12 angedeutet ist. Auch flächige Körper aus Laminat mit mehr als einer virtuellen Krümmungsachse pro Seite sind möglich (nicht dargestellt). In der Regel stehen diese zwei virtuellen Krümmungsachsen dann senkrecht zueinander, so dass der flächige Körper in seinem stabilen Zustand eine Sattelform einnimmt. Der zweite stabile Zustand kann wiederum eine Sattelform oder aber auch ein nur um eine Achse gekrümmte Form sein.

Derartige Aktuatorelemente 8 können in Aktuatorvorrichtungen 18 mit den verschiedensten Funktionen eingesetzt werden. Beispielsweise kann ein Aktuatorelement 8, wie es in Fig. 4 beschrieben ist, oder auch ein solches wie in Fig. 6 beschrieben in einem elektrischen Schalter, wie er in der US-5977858 offenbart ist, die Blattfeder ersetzen.

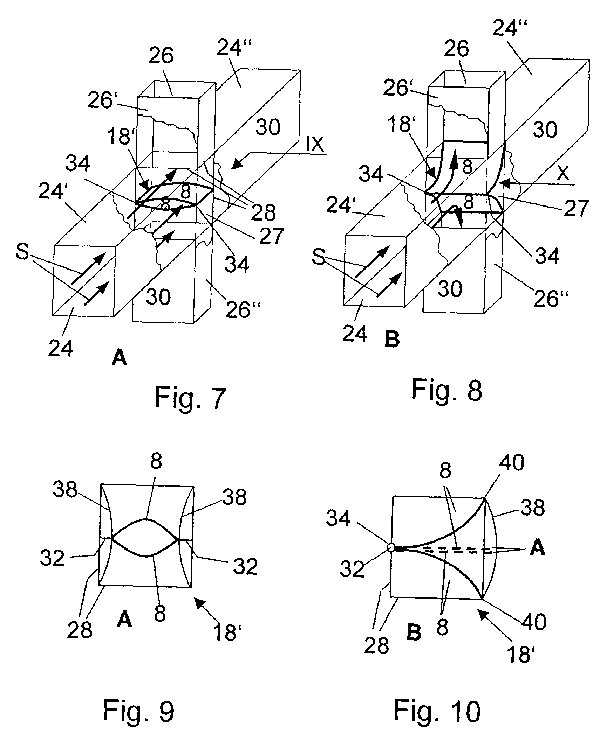

Eine andere Möglichkeit besteht darin zwei Aktuatorelemente 8, der in Fig. 6 beschrieben Art, in einer Aktuatorvorrichtung 18' zusammenzufassen, wie dies in den Fig. 7 bis 10 gezeigt ist. Diese Aktuatorvorrichtung 18 kann dann in einem Strömungskanal zur Strömungsumleitung eines Fluids (dargestellt durch Pfeile S) und gegebenenfalls gleichzeitig als Art Verschlussventil eingesetzt werden. In den Fig. 7 und 8 sind zwei sich kreuzende Strömungskanäle 24, 26 gezeigt, in dessen Kreuzungsbereich 27 eine solche Aktuatorvorrichtung 18' mit zwei Aktuatorelementen 8 angeordnet sind. Das Fluid strömt vom ersten Strömungskanal 24 her auf den Kreuzungsbereich 27 zu. Die zwei Aktuatorelemente 8 sind in einem durchströmbaren Rahmen 28 der Aktuatorvorrichtung 18' so angeordnet, dass sie in ihrem ersten stabilen Zustand A voneinander weg gekrümmt sind, wobei die nicht gekrümmten Stirnseiten einander berühren und parallel zur Strömung S in Längsrichtung des Strömungskanals 24 angeordnet sind, wie dies in den Fig. 7 und 9 dargestellt ist. In diesem ersten stabilen Zustand A bilden die Aktuatorelemente 8 einen im Strömungskanal angeordneten Hohlkörper mit linsenartigem Querschnitt, der kaum Widerstand bietet und leicht durchströmbar ist, wie dies durch die Pfeile S angedeutet ist. In ihrem zweiten stabilen Zustand B sind die Aktuatorelemente 8 gegeneinander und etwa in 90° gegenüber dem ersten stabilen Zustand A gekrümmt. Die der Strömung S zugewandten, jetzt nicht mehr gekrümmten Stirnseiten berühren einander nun und liegen etwa in der Mitte des ersten Strömungskanals 24, während die der Strömung S abgewandten, ebenfalls nicht gekrümmten Stirnseiten voneinander beabstandet in die beiden Arme 26', 26" des Strömungskanals 26 weisen. Die Aktuatorelemente 8 verschliessen in diesem Zustand den hinter dem Kreuzungsbereich 27 liegenden Teil 24" des ersten Strömungskanals 24 und leiten das Fluid S in zwei Teilströmen in die beiden vom Kreuzungsbereich 27 wegführenden Arme 26', 26"des zweiten Strömungskanals 26.

Der durchströmbare Rahmen 28 des Aktuatorvorrichtung 18 ist genau in die Begrenzung des Kreuzungsbereichs 27 durch die Kanalwände 30 der Strömungskanäle 24, 26 eingepasst, so dass er die Strömung nicht behindert. Fig. 9 zeigt eine Ansicht des Kreuzungsbereichs 27 aus Fig. 7 vom aus Strömungsrichtung gesehen hinter dem Kreuzungsbereich 27 liegenden Teil 24" des Strömungskanals 24 aus, wie es in Fig. 7 durch den Pfeil IX angedeutet ist. Fig. 10 zeigt eine Ansicht des Kreuzungsbereichs 27 aus Fig. 8 von der durch den Pfeil X in Fig. 8 angezeigten Richtung aus.

Die Aktuatorelemente 8 sind folgendermassen im Rahmen 28 der Aktuatorvorrichtung 18 gelagert: Wie aus den Fig. 9 und 10 ersichtlich, weist der Rahmen 28 an seiner der Strömung S zugewandten Seite, zwei etwa senkrecht vom Rahmen 28 und etwa senkrecht zur Strömung S in den Strömungskanal 24 hineinreichende Zapfen 32 auf. Die Zapfen 32 sind an sich in Richtung des zweiten Strömungskanals 26 erstreckenden Streben des Rahmens 28 etwa mittig angeordnet. Die Länge der Zapfen 32 entspricht etwa der Distanz, um die sich die Ecken 34 der Aktuatorelemente 8 durch die Krümmung beim Übergang vom zweiten stabilen Zustand B in den ersten stabilen Zustand A vom Rahmen 28 her in den Strömungskanal 24 zurückziehen. Die Zapfen 32 weisen Nuten auf (nicht dargestellt), die sich vom Rahmen 28 in den Strömungskanal 24 erstrecken. Die Aktuatorelemente 8 weisen an ihren der Strömung S zugewandten Ecken 34 Führungselemente auf (ebenfalls nicht dargestellt), die in die Nuten der Zapfen 32 eingreifen und in diesen verschiebbar sind. Durch das Gleiten der Führungselemente in den Nuten werden auf der der Strömung S zugewandten Seite die Aktuatorelemente 8 bewegbar gelagert und ein definierter Bewegungsablauf beim Übergang von einem stabilen Zustand in den anderen gewährleistet. An seiner aus Strömungsrichtung gesehen hinter dem Kreuzungsbereich 27 liegenden Seite weist der Rahmen 28 zwei sich im Wesentlichen in Richtung des zweiten Strömungskanals 26 erstrekkende Schienen 38 auf. In Längsrichtung der Schienen 38 sind wiederum Führungsnuten vorgesehen (nicht dargestellt). Die Aktuatorelemente 8 weisen an ihren der Strömung abgewandten Ecken 40 ebenfalls Führungselemente auf, die in die Führungsnuten der Schienen 32 eingreifen. Die Schienen 38 sind derart sowohl in Richtung des hinter dem Kreuzungsbereich 27 liegenden Teils 24" des Strömungskanals 24 als auch parallel zur Ausrichtung der Zapfen 32 gebogen sind, dass die der Strömung S abgewandten Ecken 40 der Aktuatorelemente 8 beim Übergang vom einen stabilen Zustand in den anderen definiert auf den Schienen geführt und gehalten werden. Natürlich kann zur Strömungsumleitung und zum verschliessen eines armes eines Strömungskanals auch eine Aktuatorvorrichtung 18' mit nur einem Aktuatorelement 8 verwendet werden.

Ebenfalls zur Strömungsumlenkung können erfindungsgemässe Aktuatorelemente 8 eingesetzt werden, die neben den Krümmungen wie sie für Fig. 6 beschrieben sind noch eine schraubenförmige Verdrehung aufweisen. Eine Vielzahl solcher Aktuatorelemente 8 könnten beispielsweise eine Aktuatorvorrichtung 18" bilden, die in der Art eines Leitapparates Gasströmungen effizienzsteigernd auf die Schaufeln eines Rotors z.B. eines Ventilators oder einer Turbine oder dergleichen leiten. Wird die Rotationsrichtung des Rotors geändert so nimmt normalerweise die Effizienz stark ab. Mit einem Leitapparat mit erfindungsgemässen Aktuatorelementen 8, kann die Strömung durch eine Umstellung der Aktuatorelemente von einem stabilen Zustand in den anderen stabilen Zustand an die umgekehrte Rotationsrichtung angepasst werden und der durch die Rotationsumkehr verursachte Effizienzverlust kann verringert werden. In den Fig. 11 und 12 ist dies schematisch dargestellt.

Eine weitere Ausführungsform der erfindungsgemässen Aktuatorvorrichtung 18"' umfasst zwei Aktuatorelemente 8, die in Form eines Greifers zusammenwirken, wie dies in den Fig. 13 und 14 veranschaulicht ist. In dem gezeigten Beispiel sind zwei Aktuatorelemente 8 der in Fig. 6 beschriebenen Art, mit ihrer einen Stirnseite bewegbar an einer Halteplatte 42 befestigt. Die Befestigung kann beispielsweise dadurch realisiert werden, dass die Stirnseite mit Magneten versehen wird und die Halteplatte 42 eine magnetisierbare Eisenplatte ist. Es können aber auch Führungsnuten und in diese eingreifende Führungselemente, wie für die Figuren 7 bis 10 beschrieben, vorgesehen sein. Im ersten stabilen Zustand A, Fig. 13, sind die Aktuatorelemente 8 gegeneinander und etwa senkrecht zur Halteplatte 42 gekrümmt. Im zweiten stabilen Zustand B, Fig. 14 sind die Aktuatorelemente 8 aufeinander zu und zur Halteplatte hin gekrümmt, so dass sich ihre von der Halteplatte abgewandten Stirnseiten überlappen und einen Gegenstand 44 aufnehmen können. Bei entsprechender Wahl des Laminats ist die Eigenspannung der Aktuatorelemente 8 so gross, dass auch Gegenstände mit etwas grösserem Gewicht getragen, oder Gegenstände zwischen den Aktuatorelementen 8 eingeklemmt werden können. Statt durch zwei einander gegenüber angeordnete Aktuatorelemente 8, kann ein Greifer einer solchen Aktuatorvorrichtung 18"' auch aus mehreren schmäleren Aktuatorelementen 8 gebildet werden, welche etwa in einem Kreis an der Halteplatte 42 angeordnet sind und beim schliessen einen korbförmigen Greifer bilden.

### Bezugszeichenliste

- A: erster stabiler Zustand
- B: zweiter stabiler Zustand
- S: Fluid, Strömung

- 3: erste flächige Seite
- 4: zweite flächige Seite
- 8: Aktuatorelement
- 10: flächiger Körper
- 12: erste virtuelle Achse
- 13: zweite virtuelle Achse
- 14: erster Draht
- 16: zweiter Draht
- 18, 18', 18": Aktuatorvorrichtung
- 20: Laminatschichten
- 22: Epoxydharz/Cyanoacrylat
- 24, 24', 24": erster Strömunaskanal
- 26, 26', 26": zweiter Strömungskanal
- 27: Kreuzungsbereich
- 28: Rahmen
- 30: Kanalwände
- 32: Zapfen
- 34: der Strömung S zugewandte Ecken
- 38: Schienen
- 40: der Strömung S abgewandte Ecken
- 42: Halteplatte
- 44: Gegenstand

## Patentansprüche

1. Aktuatorelement, das mit Hilfe einer thermosensiblen Gedächtnislegierung von einer ersten Position in eine zweite Position verstellbar ist, **dadurch gekennzeichnet, dass** das Aktuatorelement (8) einen flächigen Körper (10) aus einem Laminat aus faserverstärktem Kunststoff umfasst, und die erste Position im wesentlichen durch einen ersten bei Gebrauchstemperatur stabilen Zustand (A) des Laminats mit einer ersten Krümmung und die zweite Position im wesentlichen durch einen zweiten, bei Gebrauchstemperatur stabilen Zustand (B) des Laminats mit einer zweiten Krümmung gegeben ist.

2. Aktuatorelement nach Anspruch 1, **dadurch gekennzeichnet, dass** das Laminat mindestens zwei Laminatschichten (20) mit unidirektional orientierten Fasern aufweist und als Fasern in den Laminatschichten Glassfasern und/oder Kohlefasern und/oder Aramidfasern vorgesehen sind, wobei die Fasern vorzugsweise kontinuierliche Fasern sind.

3. Aktuatorelement nach Anspruch 1 oder 2, **dadurch gekennzeichnet, dass** die Matrix, in welcher die Verstärkungsfasern eingebettet sind eine thermoplastische Matrix, vorzugsweise aus PEI oder PEEK, ist.

4. Aktuatorelement nach Anspruch 1 oder 2, **dadurch gekennzeichnet, dass** die Matrix, in welcher die Fasern eingebettet sind, eine Epoxidmatrix ist.

5. Aktuatorelement nach einem der vorhergehenden Ansprüche **dadurch gekennzeichnet, dass** die Verstärkungsfasern einen Anteil von 40%-vol. bis 70%-vol. in den Laminatschichten haben.

6. Aktuatorelement nach einem der vorhergehenden Ansprüche, **dadurch gekennzeichnet, dass** die Schichtung im Laminat [0/90] oder [0₂/90₂] oder [-30/+30] ist.

7. Aktuatorelement nach einem der vorhergehenden Ansprüche **dadurch gekennzeichnet, dass** die erste Krümmung eine definierte Krümmung um eine erste virtuelle Achse (12) ist und die zweite Krümmung eine definierte Krümmung um eine zweite virtuelle Achse (13) ist, wobei die zwei virtuelle Achsen (12, 13) vorzugsweise in einem Winkel von etwa 90° zueinander stehen und insbesondere auf den einander gegenüberliegenden flächigen Seiten (3, 4) des flächigen Körpers (10) angeordnet sind.

8. Aktuatorelement nach einem der vorhergehenden Ansprüche, **dadurch gekennzeichnet, dass** die Gedächtnislegierung auf den beiden flächigen Seiten (3, 4) des flächigen Körpers (10) vorgesehen ist, und zwar vorzugsweise in Form von Drähten (14, 16), und dass sie insbesondere mittels Epoxydharz und/oder Cyanocryalat auf dem flächigen Körper (10) fixiert ist.

9. Aktuatorelement nach Anspruch 8, **dadurch gekennzeichnet, dass** die thermosensible Gedächtnislegierung auf jeder flächigen Seite (3, 4) des flächigen Körpers (10) Teil eines Stromkreises ist, der für die Gedächtnislegierung jeder Seite (3, 4) separat regelbar ist, und, dass für die Änderung von einem stabilen Zustand in den anderen stabilen Zustand die Gedächtnislegierung auf einer der beiden flächigen Seiten (3, 4) des flächigen Körpers (10) unter Ausnutzung ihres elektrischen Widerstandes erwärmbar ist.

10. Aktuatorelement nach einem der vorhergehenden Ansprüche, **dadurch gekennzeichnet, dass** die Gedächtnislegierung eine NiTiCu-Legierung, vorzugsweise mit 48.9% Ni, 45.1% Ti und 6% Cu, ist.

11. Aktuatorvorrichtung mit Aktuatorelement, welches mit Hilfe einer thermosensiblen Gedächtnislegierung von einer ersten Position in eine zweite Position verstellbar ist, **dadurch gekennzeichnet, dass** das Aktuatorelement 8 gemäss einem der vorgängigen Ansprüche aufgebaut ist.

12. Aktuatorvorrichtung nach Anspruch 10, **dadurch gekennzeichnet, dass** das Aktuatorelement 8 mit einem elektrischen Kontaktelement verbunden ist und das Kontaktelement zur Herstellung eines elektrischen Kontaktes mittels des Aktuatorelementes (8) gegen einen Kontaktpunkt eines Stromkreises bewegbar ist.

13. Aktuatorvorrichtung nach Anspruch 10, **dadurch gekennzeichnet, dass** sie mindestens ein Aktuatorelement (8) zur Umlenkung einer Strömung aufweist und vorzugsweise in einem Strömungskanal eingesetzt ist.

14. Aktuatorvorrichtung nach Anspruch 10, **dadurch gekennzeichnet, dass** sie wenigstens zwei Aktuatorelemente 8 aufweist, die im Zusammenwirken miteinander einen Greifer bilden.
